# EUROPEAN PATENT APPLICATION

(11) **EP 4 769 874 A1**
(43) Date of publication of application: **01.07.2026**
(21) Application number: 24894298.9
(22) Date of filing: 31.07.2024
(51) Int. Cl.: H02J 7/00, H02H 7/18, H02H 3/08, H02H 5/04, H01M 50/581, H01M 50/569, H01M 10/42

(54) **BATTERY OUTPUT BLOCKING CIRCUIT AND CHARGE/DISCHARGE CONTROL CIRCUIT HAVING SAME**

(30) Priority: 24.11.2023 KR 20230165560
(71) Applicant: LG Energy Solution, Ltd., Seoul 07335 (KR)
(72) Inventor: JEONG, Won Jeon, Daejeon 34122 (KR)
(74) Representative: Plasseraud IP
(86) International application number: PCT/KR2024/011233
(87) International publication number: WO 2025/110401

(57) **Abstract**

A battery output blocking circuit that blocks an output of a battery, may include a three-terminal fuse provided in an output path between the battery and an output terminal of the battery, and a negative temperature coefficient (NTC) thermistor including a first end that is connected to the three-terminal fuse and a second end that is connected to a ground terminal.

## Description

### TECHNICAL FIELD

The present disclosure relates to a battery output blocking circuit, and more particularly, to a battery output blocking circuit that blocks an output of a battery when the battery overheats, and a charging and discharging control circuit including the same.

### BACKGROUND ART

A secondary battery capable of charging and discharging, that is, a battery, is widely used as an energy source for mobile devices such as smart phones. Furthermore, the battery is used as an energy source for eco-friendly vehicles such as an electric vehicle and a hybrid electric vehicle proposed as a solution to air pollution caused by a gasoline vehicle and a diesel vehicle using fossil fuels. The types of applications using the battery are becoming very diverse, and it is expected that the battery will be applied to more fields and products than now in the future.

Currently commercialized available batteries include a nickel cadmium battery, a nickel hydrogen battery, a nickel zinc battery, and a lithium-ion battery. Among these batteries, the lithium-ion battery is spotlighted due to their advantages of free charge and discharge, very low self-discharge rate, and high energy density because the memory effect hardly occurs compared to the nickel-based battery. In addition, since the lithium-ion battery can be manufactured to be lightweight in a small size, the lithium ion battery is used as a power source for mobile devices, and the use range thereof has been expanded as a power source for the electric vehicle, thereby drawing attention as a next-generation energy storage medium. However, the lithium-ion battery is more active than other batteries and therefore have the characteristic of being somewhat less safe.

These batteries are generally used in the form of a battery pack rather than as a single battery cell. The battery pack includes at least one or more battery modules, and the battery module may be composed of a plurality of battery cells. In addition, a battery management system (BMS) is provided to manage the overall state of battery cells, battery modules, or battery packs. The BMS checks the performance and state of the battery and performs battery diagnosis to ensure a stable operation of the battery.

Meanwhile, as an application area of batteries further expands, battery safety is emerging as a very important issue. For example, in the case of laptops, mobile phones, electric vehicles, etc., ensuring battery safety is urgent in that the number of users is rapidly increasing, and battery explosions not only cause damage to the product, but can also lead to casualties or fire. In particular, products using the highly active lithium-ion battery require a protection circuit to protect a battery or an electrical device connected to the battery when an abnormality occurs in the battery in order to ensure safety.

Such a protection circuit is a blocking circuit that blocks an output of the battery by cutting off an electrical connection between the battery and the electrical device. The blocking circuit may use, for example, a fuse connected between an output terminal of the battery and the electrical device. The fuse may blow when the battery overheats, such as when battery cells are overcharged or over discharged. To blow the fuse, a temperature sensor that senses the temperature of the battery may be used, or a current sensor or voltage sensor that senses overcharging or over discharging of the battery cells may be used.

However, if a component that senses the temperature of the battery (i.e., a temperature sensor) or a component that senses overcharging or over discharging of the battery cells (i.e., a voltage sensor or current sensor) do not function properly due to failure, etc., the fuse cannot be blown. Therefore, even if the battery overheats, the connection between the battery and the electric device cannot be cut off, which may cause a problem of not being able to prevent overheating of the electric device.

Related art of the present disclosure includes Korean registered patent No. 10-1709540 (2017. 02. 17) and Japanese unexamined patent application publication JP 2003-297206 A (2003. 10. 17)

### PROBLEMS TO SOLVE

The present disclosure provides a battery output blocking circuit that can blow a fuse when a battery overheats even when a component related to temperature sensing fails, and a charging and discharging control circuit including the same.

The present disclosure provides a battery output blocking circuit that can melt and cut the fuse at high temperature using a three-terminal fuse and a thermistor, and a charging and discharging control circuit including the same.

### SOLUTIONS TO PROBLEMS

In accordance with an embodiment, a battery output blocking circuit that blocks an output of a battery may include a three-terminal fuse provided in an output path between the battery and an output terminal of the battery, and a negative temperature coefficient (NTC) thermistor including a first end that is connected to the three-terminal fuse and a second end that is connected to a ground terminal.

The three-terminal fuse may include a first fuse including a first end that is connected to a battery, a second fuse including a first end that is connected to a second end of the first fuse and a second end that is connected to the output terminal of the battery, and a fuse resistor including a first end that is connected between the first fuse and the second fuse.

The first end of the NTC thermistor may be connected to the fuse resistor and a second end thereof is connected to the ground terminal.

A resistance value of the fuse resistor may be set so that a sum of the resistance value of the fuse resistor and a resistance value of the NTC thermistor at a set output blocking temperature is not smaller than a fuse blowing current flowing through the first fuse or the second fuse.

In accordance with another embodiment, a charging and discharging control circuit may include a battery that includes a plurality of battery cells, a battery output blocking circuit that is connected to the battery and includes a three-terminal fuse and a negative temperature coefficient (NTC) thermistor configured to block an output of the battery depending on a temperature, a switching unit including a first side that is connected to the battery output blocking circuit and a second side that is connected to an output terminal of the battery to set a charging and discharging path, a first control unit configured to measure a state of the battery, and a second control unit configured to control the switching unit according to charging and discharging of the battery.

The three-terminal fuse may include a first fuse including a first end that is connected to the battery, a second fuse including a first end that is connected to a second end of the first fuse and a second end that is connected to the switching unit, and a fuse resistor including a first end that is connected between the first fuse and the second fuse, and a first end of the NTC thermistor is connected to the fuse resistor and a second end thereof is connected to a ground terminal.

A resistance of the NTC thermistor is lowered at a temperature higher than or equal to a set output blocking temperature and a current flowing through the fuse resistor increases, and the fuse resistor is heated as the current is increased to melt and cut at least one of the first fuse and the second fuse.

A resistance value of the fuse resistor is set so that a sum of the resistance value of the fuse resistor and a resistance value of the NTC thermistor at the set output blocking temperature is not smaller than a fuse blowing current flowing through the first fuse or the second fuse.

### EFFECTS OF THE INVENTION

The battery output blocking circuit according to embodiments of the present disclosure may include the three-terminal fuse provided between the battery and the output terminal of the battery, and the NTC thermistor provided between the three-terminal fuse and the ground terminal. The three-terminal fuse may include the first fuse and second fuse connected between the battery and the output terminal of the battery, and the fuse resistor of which one end is connected to a connection point of the first fuse and second fuse, and the NTC thermistor is connected between the other end of the fuse resistor and the ground terminal.

In this battery output blocking circuit according to embodiments of the present disclosure, when the NTC thermistor is exposed to high temperature, the resistance of the NTC thermistor decreases, and as the resistance of the NTC thermistor decreases, the fuse resistance, that is, the current flow in a heater part, increases. Accordingly, the fuse resistance generates heat, which blows at least one of the first fuse and second fuse to block the output of the battery.

Therefore, the present disclosure can protect a system by permanently blocking the fuse in a high temperature situation even if a problem occurs in a component or circuit related to temperature sensing. In addition, the battery output blocking circuit can be used as a redundant circuit for a pin shortage of a temperature sensor or a microcontroller unit (MCU) single fault.

### BRIEF DESCRIPTION OF THE DRAWINGS

Embodiments of the present disclosure can be understood in more detail from the following description taken in conjunction with the accompanying drawings, in which:
FIG. 1 is a circuit diagram of a battery output blocking circuit in accordance with an embodiment;
FIG. 2 is a schematic diagram for describing an operation of the battery output blocking circuit in accordance with an embodiment; and
FIG. 3 is a configuration diagram of a battery charging and discharging control circuit in accordance with another embodiment.

### DETAILED DESCRIPTION OF EMBODIMENTS

Hereinafter, embodiments of the present disclosure will be described in detail with reference to the accompanying drawings. However, the present disclosure is not limited to the embodiments disclosed below but will be implemented in a variety of different forms, and these embodiments are provided only to complete the disclosure of the present disclosure and to fully inform those skilled in the art of the scope of the invention.

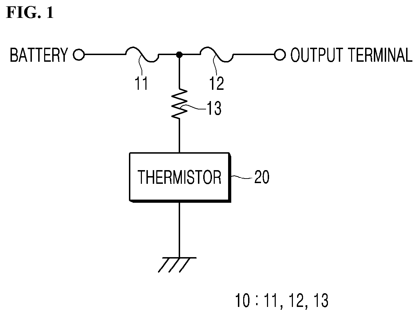

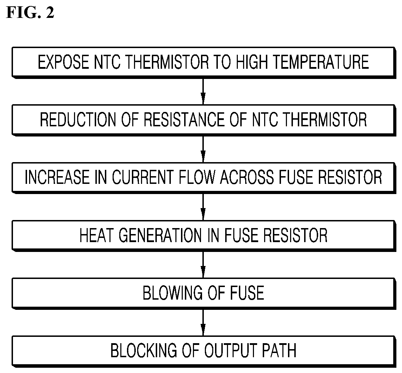

FIG. 1 is a circuit diagram of a battery output blocking circuit according to an embodiment of the present disclosure, and FIG. 2 is a schematic diagram for describing an operation of the battery output blocking circuit according to an embodiment of the present disclosure.

Referring to FIG. 1, a battery output blocking circuit according to an embodiment of the present disclosure may include a three-terminal fuse 10 connected on a output path between a battery and an output terminal of the battery and a thermistor 20 of which one end is connected to a control terminal of the three-terminal fuse 10 and the other end is connected to a ground terminal.

The three-terminal fuse 10 is connected on the output path between the battery and the output terminal to block a flow of current when an abnormal situation occurs. That is, the three-terminal fuse 10 is cut off when the battery overheats, where a battery temperature is higher than a set temperature, thereby blocking the output path between the battery and the output terminal. This three-terminal fuse 10 may include a first fuse 11 whose one end is connected to the battery, a second fuse 12 whose one end is connected to the other end of the first fuse 11 and the other end is connected to the output terminal of the battery, and a fuse resistor 13 whose one end is connected between the first and second fuses 11 and 12.

This three-terminal fuse 10 forms an output path between the battery and the output terminal of battery through the first and second fuses 11 and 12 in a normal state where the temperature of the battery is lower than the set temperature. However, in a high temperature state where a temperature of the battery is higher than a set temperature, at least one of the first and second fuses 11 and 12 is blown by the fuse resistor 13, thereby cutting off the output path. That is, in the three-terminal fuse 10, when the battery overheats, a fuse resistor 13 is heated, and when the fuse resistor 13 is heated to a temperature higher than or equal to a predetermined temperature, at least one of the first and second fuses is blown to cut off the connection. In this case, the fuse resistor 13 is not heated when a current below a set value flows from the battery or the temperature of the battery is less than or equal to the set temperature, and an output of the battery is transmitted to the output terminal through the first and second fuses 11 and 12. However, when a current exceeding the set value flows from the battery or the temperature of the battery is higher than equal to the set temperature, the fuse resistor 13 is heated. When the fuse resistor 13 is heated to a temperature higher than equal to the set temperature, at least one of the first and second fuses 11 and 12 is blown to block the output path between the battery and the output terminal. Meanwhile, the fuse resistor 13 is set so that a sum of the resistance value of the fuse resistor 13 and a resistance value of the NTC thermistor 20 at a set output blocking temperature is not smaller than a fuse blowing current of the current flowing through the first fuse 11 or the second fuse 12.

One end of the thermistor 20 is connected to the fuse resistor 13 and the other end thereof is connected to the ground terminal. This thermistor 20 is a device whose resistance value changes significantly depending on temperature changes by adding impurities such as cobalt, copper, manganese, nickel, and titanium to a ceramic material. The thermistor 20 of the present disclosure may be a negative temperature coefficient (NTC) thermistor having negative temperature coefficient characteristics in which resistance thereof decreases as the temperature increases. That is, the NTC thermistor has an initial high resistance value, and as current flows, the thermistor temperature rises, and the resistance value decreases accordingly.

In the battery output blocking circuit including the three-terminal fuse 10 and the NTC thermistor 20 according to the present disclosure, as shown in FIG. 2, when the NTC thermistor 20, which has an initial high resistance value, is exposed to high temperature, a resistance of the NTC thermistor 20 decreases. When the resistance of the NTC thermistor 20 decreases, the current flow through the fuse resistor 13 increases and the fuse resistor 13 generates heat accordingly. When the fuse resistor 13 generates heat and the temperature of the fuse resistor 13 rises to a temperature higher than or equal to a predetermined temperature, at least one of the first and second fuses 11 and 12 is blown, and the output path between the battery and the output terminal is blocked accordingly.

As described above, the battery output blocking circuit according to an embodiment of the present disclosure may include the three-terminal fuse 10 provided between the battery and the output terminal of the battery and the NTC thermistor 20 provided between the three-terminal fuse 10 and the ground terminal. The three-terminal fuse 10 may include the first and second fuses 11 and 12 connected between the battery and the output terminal of the battery, and the fuse resistor 13 of which one end is connected to a connection point of the first and second fuses 11 and 12. The NTC thermistor 20 is connected between the other end of the fuse resistor 13 and the ground terminal.

In the battery output blocking circuit according to the embodiments of the present disclosure, when the NTC thermistor 20 is exposed to high temperature, the resistance of the NTC thermistor 20 decreases, and as the resistance of the NTC thermistor 20 decreases, the fuse resistor 13, that is, the current flow in the heater unit increases. Accordingly, the fuse resistor 13 generates heat, which blows at least one of the first and second fuses 11 and 12 to block the output of the battery.

The battery output blocking circuit according to an embodiment of the present disclosure may permanently block a power source by melting and cutting the fuse at high temperature using the characteristics of the three-terminal fuse 10 and the NTC thermistor 20 without a separate signal to diagnose the battery. Therefore, even if a problem occurs in a component or circuit related to temperature sensing, the fuse may be permanently blown in a high temperature situation to protect the system. In addition, the battery output blocking circuit can be used as a redundant circuit for a lack of pins in a temperature sensor or an MCU signal error (single fault).

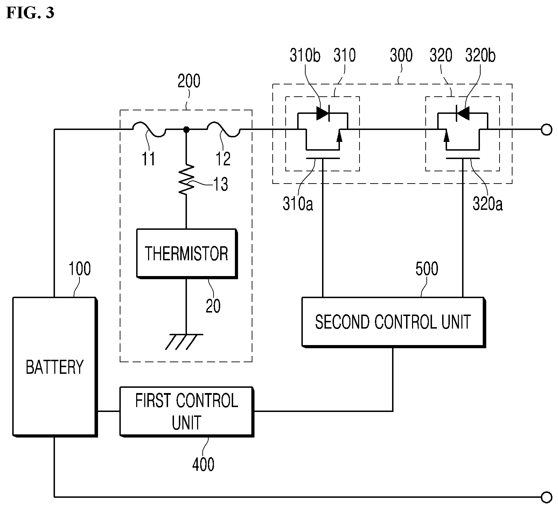

FIG. 3 is a diagram for describing a battery charging and discharging control circuit according to another embodiment of the present disclosure including the battery output blocking circuit according to the present disclosure.

Referring to FIG. 3, the charging and discharging control circuit according to another embodiment of the present disclosure may include a battery 100, a battery output blocking circuit 200 provided in an output path between the battery 100 and an output terminal of the battery, that is, the load, a switching unit 300 provided between the battery output blocking circuit 200 and the output terminal of the battery, a first control unit 400 connected to the battery 100 to measure a state of the battery, and a second control unit 500 that controls the switching unit 300.

### 1. Battery

The battery 100 can be charged and discharged and is an electrical energy source that provides energy to an eco-friendly vehicle to drive the eco-friendly vehicle. Here, the battery 100 may include at least one battery pack, each of the at least one battery pack may include a plurality of battery modules, and the battery module may include a plurality of battery cells that can be charged and discharged. That is, the battery 100 includes a plurality of battery cells, the plurality of battery cells may be grouped into a predetermined unit to form the battery module, and a plurality of battery modules may form one battery pack. Here, in the embodiment of the present disclosure, at least one battery pack may be included in the battery. Meanwhile, a plurality of battery cells may be connected in series and/or parallel in various ways to meet the specifications of an eco-friendly vehicle. Of course, a plurality of battery packs each including a plurality of battery cells may also be connected in series and/or parallel. Here, the battery cell may include a lithium-ion battery. However, the battery cell may be composed of not only a lithium-ion battery, but also a lithium polymer battery, a nickel-cadmium battery, a nickel-hydrogen battery, a nickel-zinc battery, etc.

### 2. Battery output blocking circuit

The battery output blocking circuit 200 may include the three-terminal fuse 10 connected on the output path between the battery 100 and the output terminal of the battery, and the thermistor 20 of which one end is connected to the control terminal of the three-terminal fuse 10 and the other end is connected to the ground terminal. The three-terminal fuse 10 is connected to the output path between the battery and the output terminal to block the flow of current when an abnormal situation occurs. That is, the three-terminal fuse 10 is cut off when the battery overheats, where the battery temperature is higher than the set temperature, thereby blocking the output path between the battery and the output terminal. This three-terminal fuse 10 may include the first fuse 11 of which one end is connected to the battery, the second fuse 12 of which one end is connected to the other end of the first fuse 11 and the other end is connected to the output terminal to output the output of the battery that has passed through the first fuse 11 to the other end, and the fuse resistor 13 whose one end is connected to a fuse control terminal connected between the first fuse 11 and the second fuse 12. One end of the thermistor 20 is connected to the fuse resistor 13, and the other end thereof is connected to the ground terminal. The thermistor 20 of the present disclosure may be a negative temperature coefficient (NTC) thermistor having a negative temperature coefficient characteristic in which resistance thereof decreases as the temperature increases. That is, the NTC thermistor has an initial high resistance value, and as current flows, the thermistor temperature rises, and the resistance value thereof decreases accordingly.

In this battery output blocking circuit 200, when a current below a set value flows from the battery or the temperature of the battery is less than or equal to a set temperature, the fuse resistance 13 is not heated and the output of the battery is transmitted to the output terminal through the first and second fuses 1 and 12. However, when a current greater than or equal to the set value flows from the battery or the temperature of the battery is higher than or equal to the set temperature, the NTC thermistor 20 is exposed to high temperature and the resistance of the NTC thermistor 20 is decreased. When the resistance of the NTC thermistor 20 decreases, the current flow through the fuse resistor 13 increases and accordingly, the fuse resistor 13 generates heat. When the fuse resistor 13 generates heat and the temperature of the fuse resistor 13 rises to a temperature higher than or equal to a predetermined temperature, at least one of the first and second fuses 11 and 12 is blown, thereby blocking the output path between the battery and the output terminal. In this case, the fuse resistor 13 is set so that a sum of the resistance value of the fuse resistor 13 and a resistance value of the NTC thermistor 20 at a set output blocking temperature is not smaller than the fuse blowing current of the current flowing through the first fuse 11 or the second fuse 12.

### 3. Switching unit

The switching unit 300 may include a charging switch 310 and a discharging switch 320. The charging switch 310 and the discharging switch 320 are installed on a charging and discharging path of the battery 100 to selectively block the flow of charging current and discharging current. Thus, the charging and discharging path from the battery 100 to a load via the fuses 11 and 12 of the battery output blocking circuit 200, the charging switch 310, and the discharging switch 320 is formed.

The switching unit 300 is provided between a current path between the battery 100 and the load and controls charging and discharging of the battery 100 by the second control unit 500. This switching unit 300 is provided between the battery 100 and the load. The charging switch 310 may be provided on the battery 100 side, and the discharging switch 320 may be provided on the load side. The charging and discharging switches 310 and 320 are driven according to control signals generated by the second control unit 500 and may be driven simultaneously when the battery 100 is charged or discharged, or either one of them may be driven. For example, the charging switch 310 may be driven when the battery 100 is charged, and the discharging switch 320 may be driven when the battery 100 is discharged. Here, the load may include an external power source for charging the battery 100 and an electronic device equipped with the battery 100 that is driven depending on a discharge voltage of the battery 100. That is, the battery 100 may be connected to the external power source during charging and connected to the electronic device during discharging.

The charging switch 310 may include a first FET 310a and a first parasitic diode 310b. A source terminal and drain terminal of the first FET 310a are provided between the battery 100 and the second FET 320a, and a gate terminal thereof is connected to the second control unit 500. Accordingly, the first FET 310a is driven according to the control signal output from the second control unit 500 and serves to apply current to the battery 100 during charging. The first parasitic diode 310b is connected in parallel to the first FET 310a. That is, the first parasitic diode 310b is connected in a forward direction between the battery 100 and the second FET 320a. This first parasitic diode 310b sets a discharging path of the battery 100 when the first FET 310a is turned off. That is, the battery 100 may be charged through the first FET 310a and discharged through the first parasitic diode 310b.

The discharging switch 320 may include a second FET 320a and a second parasitic diode 320b. A source terminal and a drain terminal of the second FET 320a are provided between the first FET 310a and the load, and a gate terminal thereof is connected to the second control unit 500. Accordingly, the second FET 320a is driven according to the control signal output from the second control unit 500 and serves to apply a discharging current of the battery 100 to the electronic device connected thereto during discharging. The second parasitic diode 320b is connected in parallel to the second FET 320a. That is, the second parasitic diode 320b is connected in a reverse direction between the first FET 310a and the load. This second parasitic diode 320b sets a path for charging current when the battery 100 is charged or discharged. That is, the battery 100 may be discharged through the second FET 320a and charged through the second parasitic diode 320b.

The gate terminal of the first FET 310a and the gate terminal of the second FET 320a of the switching unit 300 are connected to the second control unit 500, and the first and second FETs 310a and 320a are driven according to the control signal output from second control unit 500.

### 4. First control unit

The first control unit 400 may be connected to both ends of the battery 100 and/or both ends of each of battery cells included in the battery 100 to measure a state such as a voltage across the battery 100 or the battery cell. In this case, the first control unit 400 may measure the temperature of the battery 100, and the current of the battery 100 or the battery cell. Meanwhile, the first control unit 400 may be electrically connected to the three-terminal fuse 10 and control blowing of the three-terminal fuse 10. To this end, the first control unit 400 is provided with a fuse control switch, and the first control unit 400 may blow the three-terminal fuse 10 through the fuse control switch. In this case, the fuse control switch may be made of a FET with a parasitic diode inside it. However, in the present disclosure, the three-terminal fuse 10 may be blown at high temperature by using the resistance change according to the temperature change of the three-terminal fuse 10 and the NTC thermistor 20, without providing a separate fuse control switch in the first control unit 400. Of course, the present disclosure may include a fuse control switch provided in the first control unit 400 and the battery output blocking circuit 200 at the same time. In this case, even if the fuse control switch does not function properly due to a failure, etc., the battery output blocking circuit 200 may block the output of the battery according to temperature changes.

### 5. Second control unit

The second control unit 500 controls charging and discharging of the battery 100 according to the state of the battery cell. For example, the second control unit 500 may control charging and discharging of the battery 100 according to a voltage of the battery 100 measured by the first control unit 400. That is, the second control unit 500 may control charging and discharging of the battery 100 by controlling the charging switch 310 and the discharging switch 320 of the switching unit 300.

The second control unit 500 may be connected to the gate terminal of the first FET 310a and the gate terminal of the second FET 320a to respectively drive the first and second FETs 310a and 320a according to the control signal. The second control unit 500 turns on the first FET 310a and turns off the second FET 320b when the battery 100 is charged. Accordingly, the battery 100 is charged through the second parasitic diode 320b and the first FET 310a from a load, that is, an external power source. In addition, the second control unit 500 turns on the second FET 320a and turns off the first FET 310a when the battery 100 is discharged. Accordingly, the battery 100 is discharged through the first parasitic diode 310b and the second FET 320a. In this case, the control signal that turns on each of the first and second FETs 310a and 320a may be a logic high signal, and the control signal that turns off each of the first and second FETs 310a and 320a may be a logic low signal.

As described above, in another embodiment of the present disclosure, the battery output blocking circuit 200 may be provided in the charging and discharging control circuit including the charging and discharging switches 310 and 320. Therefore, in the normal temperature range, the battery 100 may be charged and discharged through the first and second fuses 11 and 12 of the battery output blocking circuit 200. At a high temperature higher than the set temperature, at least one of the first and second fuses 11 and 12 of the battery output blocking circuit 200 is blown due to the characteristics of the NTC thermistor 20 and the fuse resistor 13, thereby blocking the battery 100 and output path.

Although the battery output blocking circuit and the charging and discharging control circuit including the same have been described with reference to the specific embodiments, they are not limited thereto. Therefore, it will be readily understood by those skilled in the art that various modifications and changes can be made thereto without departing from the spirit and scope of the present invention defined by the appended claims.

Names of reference numerals used in the specification and drawings are as follows.
11: first fuse
12: second fuse
13: fuse resistor
10: three-terminal fuse
20: thermistor
100: battery
200: battery output blocking circuit
300: switching unit
400: first control unit
500: second control unit

## Claims

1. A battery output blocking circuit that blocks an output of a battery, the battery output blocking circuit comprising:
a three-terminal fuse provided in an output path between the battery and an output terminal of the battery; and
a negative temperature coefficient (NTC) thermistor including a first end that is connected to the three-terminal fuse and a second end that is connected to a ground terminal.

2. The battery output blocking circuit of claim 1, wherein the three-terminal fuse comprises,
a first fuse including a first end that is connected to a battery side;
a second fuse including a first end that is connected to a second end of the first fuse and a second end that is connected to the output terminal of the battery; and
a fuse resistor including a first end that is connected between the first fuse and the second fuse.

3. The battery output blocking circuit of claim 2, wherein the first end of the NTC thermistor is connected to the fuse resistor and the second end thereof is connected to the ground terminal.

4. The battery output blocking circuit of claim 3, wherein a resistance value of the fuse resistor is set so that a sum of the resistance value of the fuse resistor and a resistance value of the NTC thermistor at a set output blocking temperature is not smaller than a fuse blowing current flowing through the first fuse or the second fuse.

5. A charging and discharging control circuit, comprising:
a battery including a plurality of battery cells;
a battery output blocking circuit connected to the battery and including a three-terminal fuse and a negative temperature coefficient (NTC) thermistor configured to block an output of the battery depending on a temperature;
a switching unit including a first side that is connected to the battery output blocking circuit and a second side that is connected to an output terminal of the battery to set a charging and discharging path;
a first control unit configured to measure a state of the battery; and
a second control unit configured to control the switching unit according to charging and discharging of the battery.

6. The charging and discharging control circuit of claim 5, wherein
the three-terminal fuse includes a first fuse having a first end that is connected to the battery, a second fuse having a first end that is connected to a second end of the first fuse and a second end that is connected to the switching unit, and a fuse resistor including a first end that is connected between the first fuse and the second fuse, and
a first end of the NTC thermistor is connected to the fuse resistor and a second end thereof is connected to a ground terminal.

7. The charging and discharging control circuit of claim 6, wherein a resistance of the NTC thermistor is lowered at a temperature higher than or equal to a set output blocking temperature and a current flowing through the fuse resistor increases, and the fuse resistor is heated as the current is increased to melt and cut at least one of the first fuse and the second fuse.

8. The charging and discharging control circuit of claim 7, wherein a resistance value of the fuse resistor is set so that a sum of the resistance value of the fuse resistor and a resistance value of the NTC thermistor at the set output blocking temperature is not smaller than a fuse blowing current flowing through the first fuse or the second fuse.
